# EUROPEAN PATENT APPLICATION

(11) **EP 3 651 094 A1**
(43) Date of publication of application: **13.05.2020**
(21) Application number: 18828871.6
(22) Date of filing: 29.06.2018
(51) Int. Cl.: G06Q 10/10

(54) **METHOD FOR GRANTING FORM OPERATION AUTHORITY RESPECTIVELY ACCORDING TO FORM FIELD VALUES**

(30) Priority: 01.07.2017 CN 201710529317
(71) Applicant: Chengdu Qianniucao Information Technology Co., Ltd, Chengdu, Sichuan 610000 (CN)
(72) Inventor: CHEN, Dazhi, Meishan, Sichuan 620000 (CN)
(74) Representative: Bandpay & Greuter
(86) International application number: PCT/CN2018/093815
(87) International publication number: WO 2019/007291

(57) **Abstract**

The present invention discloses a method for respectively authorizing operation permissions of a form according to form-field values, which includes a step of authorizing operation permissions of form data and a step of selecting a grantee. The step of authorizing operation permissions of form data includes the following steps: S1: selecting a form to be authorized; S2: selecting a field in which the operation permission is to be authorized in the form; and S3: authorizing the operation permissions according to form data respectively corresponding to all field values of the selected field. The present invention can achieve authorizing to delete, modify and print a form respectively based on form-field values, and thus achieves a wider application range. In the present invention, the form data, the field values of the selected field of which are empty, is effectively and uniformly authorized, thereby achieving the convenience in authorization operation and reduced authorization workload. In the present invention, the operation permission is authorized to the entire form of all field values of the selected field, so that authorization operation is simple and efficient. The method is particularly suitable for the case that a company executive with all permissions is authorized.

## Description

### BACKGROUND

### Technical Field

The present invention relates to a form-authorizing method in management software such as ERP, and in particular, to a method for respectively authorizing operation permissions of a form according to a form-field value.

### Related Art

In a conventional software system, the form-viewing permissions can be authorized respectively based on form-field values. For example, the type of a selected form is "contract", a form field is selected as "industry of a customer", and its form-field values are "medical industry", "chemical industry", "construction industry", "education industry" and the like. It allows a user of a system to respectively control the viewing permissions of contract forms of customers in different industries. For example, the user of the system is allowed to view the customer contracts in the medical industry, but not to view the customer contracts in the chemical industry. However, the conventional software system fails to achieve respective authorization for permissions, such as deleting, modifying, printing a form based on form-field values. It is not achievable if the system requires a user to modify the customer contracts in the medical industry, but not to modify customer contracts in the education industry. The form-authorizing method under conventional software also fails to achieve respective control to different permissions of deleting, modifying and printing customer forms at different levels.

In addition, the conventional form-authorizing method fails to effectively authorize the permissions to the form data, the field values of a selected field of which are empty. The so-called "the field values of a selected field are empty" means that the content of a field in a form is empty (unfilled or unselected), resulting in more limitations in its use. For example, when a contract form is set, if the industry of a customer is not filled (because the industry of a customer may not be a mandatory field), or the industry of a customer is difficult to define, the permissions cannot be authorized to such contract form data through the field "industry of a customer". If these contract form data need to be authorized, it is necessary to authorize each form data individually, resulting in large authorization workload and being prone to errors.

Furthermore, the conventional software cannot achieve respective authorization for the viewing permission of a related form and a related statistic of a form. The authorization for a related form in the conventional software only involves the control to the viewing function by authorizing the related form itself. By means of such authorization, a complete match of the form permissions required in management cannot be achieved in actual control. For example, in the case of authorizing permissions to Zhang San, a customer form is authorized to a Chengdu's customer, while a contract form is not authorized to a Chengdu's contract, and an order form is not authorized to a Chengdu's order either (this is an authorization for an independent form). After the above authorization, when Zhang San clicks on the related information of a customer, there are two conventional processing methods: A. The contract and order related to the customer are invisible to Zhang San (such method is controlled by the form permissions of the contract or the order itself)., such that the user cannot be distinguished to authorize the related forms and the related statistic distinguishably. For example, the customer form may be related to a contract, an order, a production form, a shipping form, an installation form, an after-sales form and the like. However, it is impossible for the conventional methods that the user Zhang San is authorized to view only the contract related to the customer, but Li Si is authorized to view the related installation form and after-sale form.

The related form visible to each user may be different. Under the conventional form-authorizing control, the related authorization may not be right. For example, a customer is from Haier Electronics. In the case of viewing an order of the customer, if Zhang San wants to see the related order of the customer through the related information of the customer, it is necessary to determine whether Zhang San's authorization conditions include this order or not, and if not, this order is invisible to Zhang San. Alternately, when an independent after-sale order is authorized, if there is no authorization to view after-sale orders in the electrical appliance industry, the customer's related after-sale order is invisible

Or, B. Both the contract and order related to the customer are visible (such method is neither controlled by the permissions of the contract or the order itself, and nor controlled by other methods, and all pieces of related information are visible by default). If multiple contracts are involved in one order, the order information not under a current contract is visible for all involved contracts (even these contracts belong to different customers). Alternatively, the order is related to a shipping form, but the shipping form is used to ship the goods in different orders. Also, when viewing the shipping order through this order, the shipping information not under this order is visible. These pieces of sensitive information may cause unnecessary losses to a company.

### SUMMARY

### Technical Problems

The object of the present invention is to overcome the deficiencies of the prior art, and provide a method for respectively authorizing operation permissions of a form according to a form-field value, to achieve more strict control to form data and greatly improve the fineness of management.

### Solutions to Problems

### Technical Solutions

The object of the present invention is achieved by the following technical solutions: A method for authorizing operation permissions of a form according to a form-field value includes a step of authorizing a permission of viewing form data and a step of selecting a grantee, wherein there is no sequence relation between the step of authorizing a permission of viewing form data and the step of selecting a grantee. The step of authorizing a permission of viewing form data includes the following steps: S1: selecting a form to be authorized; S2: selecting a field in which a viewing permission is to be authorized in the form, wherein the selected field should be a field the values of which are determined selectively or automatically; and S3: authorizing a viewing permission according to form data respectively corresponding to all field values of the selected field; said grantee is one or more roles, said role is an independent individual not a group or class, one role can only be related to a unique user during the same period, and one user is related to one or more roles.

A method for respectively authorizing operation permissions of a form according to a form-field value includes a step of authorizing operation permissions of form data and a step of selecting a grantee, wherein there is no sequence relation between the step of authorizing operation permissions of form data and the step of selecting a grantee. The step of authorizing operation permissions of form data includes the following steps: S1: selecting a form to be authorized; S2: selecting a field in which the operation permission is to be authorized in the form, wherein the selected field should be a field the values of which are determined selectively or automatically; and S3: authorizing the operation permissions according to form data respectively corresponding to all field values of the selected field. The authorization process includes a step of authorizing operation permissions to the entire form data, the field values of the selected field of which are empty.

One or more grantees may be selected in the case of selecting a grantee, and there is a form allowed to be selected and only one there of when the form to be authorized is selected.

When there is a grantee allowed to be selected and only one thereof, and a form to be authorized is selected, an operator and operation time that the form is authorized to the grantee at last time are displayed.

Said grantee is one or more roles, said role is an independent individual not a group or a class, one role can only be related to a unique user during the same period, and one user is related to one or more roles.

Said operation permission includes one or a combination of more of a viewing permission, a modifying permission, a deleting permission, and a printing permission.

The method for respectively authorizing operation permissions of a form according to a form-field value also includes a step of respectively authorizing the viewing permission of the related form and the related statistic of the form.

The method for respectively authorizing operation permissions of a form according to a form-field value further includes: (1) selecting an grantee and an authorized form, where one or more roles are selected as the grantee, said role is an independent individual not a group or a class, one role can only be related to a unique user during the same period, and one user is related to one or more roles; (2) authorizing the form to the grantee: selecting an existing role or a created template as an authorization template, and giving the form-operation permission of the authorization template to the grantee; and (3) getting the form-operation permission of the grantee after the form-operation permission is saved with or without modification.

The efficiency of authorization to the grantee can be further improved by using a template authorization method.

A method for respectively authorizing operation permissions of a form respectively according to a form-field value includes a step of authorizing operation permissions of form data and a step of selecting a grantee, wherein there is no sequence relation between the step of authorizing operation permissions of form data and the step of selecting a grantee. The step of authorizing operation permissions of form data includes the following steps: S1: selecting a form to be authorized; S2: selecting a field in which the operation permission is to be authorized in the form, wherein the selected field should be a field the values of which are determined selectively or automatically; and S3: authorizing the operation permissions according to form data respectively corresponding to all field values of the selected field. The authorization process includes a step of authorizing operation permissions to the entire form data of all field values of the selected field.

A method for respectively authorizing operation permissions of a form according to a form-field value includes a step of authorizing operation permissions of form data and a step of selecting a grantee, wherein there is no sequence relation between the step of authorizing operation permissions of form data and the step of selecting a grantee. The step of authorizing operation permissions of form data includes the following steps: S1: selecting a form to be authorized; S2: selecting a field in which the operation permission is to be authorized in the form, wherein the selected field should be a field the values of which are determined selectively or automatically; and S3: authorizing the operation permissions according to form data respectively corresponding to all field values of the selected field, wherein said operation permission includes one or a combination of more of a viewing permission, a modifying permission, a deleting permission, and a printing permission.

### Beneficial Effects of the Invention

### Beneficial Effects

The present invention has the following beneficial effects:
1) The present invention can achieve authorizing to delete, modify and print a form respectively based on a form-field value, which achieves a wider application range and greatly improves strictness and fineness of management.
   For example, the type of a selected form is "contract", a form field is selected as "industry of a customer", and its form-field values involve "medical industry", "chemical industry", "construction industry", "education industry" and the like. It allows a user of a system to respectively control the viewing permissions of contract forms of customers in different industries. For example, the user of the system is allowed to view the customer contracts in the medical industry, but not to view the customer contracts in the chemical industry. Meanwhile, it is achievable if the system requires a user to modify the customer contracts in the medical industry, but not to modify the customer contracts in the education industry.
2) In the present invention, the form data, the field values of the selected field of which are empty, is effectively and uniformly authorized, thereby achieving the convenience in authorization operation and reduced authorization workload. The so-called "the field values of the selected field are empty" means that the content of a field in the form is empty (unfilled or unselected because this field may have remained a non-mandatory field previously). For example, when a contract form is set, if the industry of a customer is not filled (because the industry of a customer may not be a mandatory field, or the field of the industry of a customer in the contract form is not set as a mandatory field, such that the form data can be submitted/saved without selecting this field), or the industry of a customer is not selected because it is hardly defined, such contract forms (contract data) are classified as form data where the content of the field of the industry of a customer is empty. By selecting the "empty" item, such contract form data can be uniformly authorized to newly create (newly add), view/inquire, modify, delete, print and the like, which is convenient to operate.
3) In the present invention, the operation permission is authorized to the entire form (form data) of all field values of the selected field simply and efficiently, which is particularly suitable for the case that the form permissions of respective field values are same. For example, regardless of what is the field value of the field of the industry of a customer in the contract form (contract data), the operation permissions of the form (form data) are same and unlimited. An "unlimited" item may be selected directly under this operation permission, which means that the form data corresponding to all field values is under this operation permission. There are two other advantages to set the "unlimited" function: 1. "Unlimited" may be selected when a company executive with all permissions is authorized. 2. Once "unlimited" is selected, the field values will be increased later (the field value options are increased), and the permissions of the grantee still will not be affected because "unlimited" is selected.
4) When there is a grantee allowed to be selected and only one thereof, and a form to be authorized is selected, an operator and operation time that the form is authorized to the grantee at last time are displayed. Displaying the last operator helps to track accountability when an error occurs in authorizing the permissions of the form, and displaying the last operation time helps to intuitively judge whether or not the form needs to be re-authorized.
   For example, Li Si completed the last operation of authorizing the permissions of a contract form to a grantee Zhang San at 11:00 on May 21, 2015. When Zhang San is selected as the grantee and the contract is selected as a form to be authorized, it is displayed for the current authorization operator that the last contract form authorization was performed by Li Si at 11:00 on May 21, 2015 for Zhang San.
   If Zhang San should not have the permission to view the content of confidential information, but is made to obtain the permission to view the content of the confidential information in the last authorization to Zhang San, the responsible person can be found by searching for the last authorization operator in a subsequent accountability-tracking process.
   For another example, an operator needs to authorize a contract form to 100 grantees; however, the operator only finished authorizing 70 grantees on that day. When the operator continued to authorize on the next day, the operator may view the time when each grantee is authorized at last time to determine whether or not the grantee needs to be authorized. Alternatively, according to a time range of authorization, all grantees that are authorized in a specified time range can be found. By viewing the last time that a grantee was authorized, it can be known how long the grantee's permissions have remained unchanged, which helps to intuitively judge whether to re-authorize the grantee.
5) In the present invention, the viewing permission of the related form and the related statistic of the form can be authorized respectively, that is, the related form/related statistic of the customer form is authorized while the customer form is authorized. For example, when a customer form is authorized to Zhang San, if a contract form, an order form, a shipping statistic and the like, which are related to the customer form are displayed, Zhang San may be authorized to see the "related contract". Then, in the case of viewing the related information of a customer, Zhang San can view the contract information related to the customer, but cannot view the customer's order and shipping statistic information. The present application solves the problem of authorization matching vulnerability between forms that may occur in the prior art in viewing the related information between forms controlled by independent form permissions, and also solves the problem in the prior art that the related information cannot be selectively viewed (all pieces of related information can be viewed by default conventionally).
   In the present application, when a form is authorized, a related form or a related statistic of the form (such as a customer form) is displayed for selection in authorization. In addition, these related statistics only involve the statistics on the contract information related to the customer, thereby avoiding unnecessary information leakage and possible losses of the company.
6) The operation permission authorization is performed according to form data respectively corresponding to all field values of a field, wherein the operation permission includes a modifying permission, a deleting permission and a printing permission. A particularly applicable example is a customer level authorization that a form field is a user level field (the "customer level" field in the customer form). For example: for a non-important customer whose field value of the customer level field is "fifth-level customer", a user can be authorized to modify and delete a form (fifth-level customer/form data) and also print the form (fifth-level customer/form data); for an important customer whose field value is "first-level customer", the modifying, deleting and printing functions are not authorized, thereby preventing the important customer's form (first-level customer/form data) from being maliciously modified or deleted, and also preventing the important customer's data from being leaked by printing.
7. In the present application, the role is in one-to-one relation to the user. One role can only be related to a unique user during the same period, and one user is related to one or more roles. The advantage thereof is that the permissions can be gotten as long as the user is related to the role (that is, the user obtains the permissions of its related role), and changes of the role's permissions are much fewer than the changes of the user's permissions in a conventional mechanism. As there are few changes of the quantity of roles having the nature of an independent individual (the nature of a post number or a station number), despite large turnover of employee, few changes occur in the post number/station number (even there is no change within a certain period, that is, the role does not change). This greatly simplifies user's permission management and reduces system overheads.
8. The operations such as dynamic management, recruitment, and transfer are simple, convenient, efficient and highly reliable. The application of recruitment or resignation or transfer in the approval flow (and form permission management) is simple. An operation subject of the approval flow is a role. When an employee or a user has changed, it is unnecessary to reset the approval flow. It is only necessary for a user to cancel the relation or be related to the role. For the user who no longer has the post number or station number, the relation to the role is canceled; and the user who takes over the post number and station number is related to the role of the post number. The user related to the role automatically obtains the related tasks and the operation permissions of that role in the approval flow, without resetting the approval flow or re-authorizing the role in the flow (the user related to the role also automatically obtains form-operation permissions for the role, without re-authorizing the form-operation permissions for the role), thus greatly improving the efficiency, security, and reliability of the flow setting.
   For example, because user Zhang San is transferred or resigns from a post, Zhang San no longer works as a role of "purchaser 3", and Zhang San then cancels the relation to "purchaser 3". Meanwhile, Li Si takes over the work as the role of "purchaser 3", and it only needs to relate Li Si to the role, so Li Si automatically obtains the approval task and the approval permission of the role "purchaser 3" in the approval flow (Li Si also automatically obtains the operation permission for the form of the role "purchaser 3").
9. The conventional permission management mechanism defines the role as the nature of a group, a type of work, a class or the like. The role is in a one-to-many relation to the user. In the actual process of using a system, the user's permissions often need to be adjusted during the operation process. For example, in processing the change of an employee's permissions, when the permissions of an employee related to the role have changed, it is improper to change the permissions of the entire role due to the change of the permissions of the individual employee, because this role is also related to other employees whose permissions remain unchanged. To deal with this situation, either a new role is created to fit the employee whose permissions have changed, or permissions are directly authorized to the employee (disengaged from the role) based on permission requirements. The above two processing methods not only take a long time but also cause mistakes easily for the role authorization in the case of a large number of role permissions. It is cumbersome for a user to operate, and errors occur easily, resulting in loss to the user of the system.
   However, under the method of the present application, as the role is an independent individual, the object can be achieved by changing the role's permissions. Although the method in the present application seems to increase the workload during system initialization, by means of copying or the like, the role can be created or authorized more efficiently than the conventional roles having the nature of a group/a class. As it is unnecessary to consider the commonality of the roles having the nature of a group/a class when satisfying the related users, the solutions in the present application make the permission setting clear and explicit. Especially after the system has been used for a period of time (after the permissions of the user/role have changed dynamically), the solutions in the present application can significantly improve the efficiency of permission management for the user of the system in using the system, make the dynamic authorization simpler, more convenient, clearer and more explicit, and improve the efficiency and reliability of the permission setting.
10. The conventional role authorization method with the nature of a group/class is prone to errors. The method provided in the present application significantly reduces the probability of authorization errors, because the method of the present application only needs to consider the role as an independent individual, without considering the commonality of multiple users related to the role having the nature of a group under the conventional method. Even if errors occur in authorization, only the user related to the role is affected. However, in the case of the conventional role having the nature of a group, all users related to the role are affected. Even if errors occur in authorization, the correction method in the present application is simple and takes a short time, while in the case of the conventional role having the nature of a group, the commonality of the permissions of all users related to the role needs to be considered during correcting the error. The modification is cumbersome, complex, and error-prone when the role has many function points, and in many cases, the problem cannot be solved unless a new role is created.
11. In the conventional group-based role authorization method, if the role has many permission function points, as time goes by, it is difficult to remember specific permissions of the role, and it is even more difficult to remember the permission differences between roles with similar permissions. If a new user needs to be related, it cannot be accurately determined how to select a relation. In the method of the present application, the role itself has the nature of a post number or station number, such that the selection can be made easily.
12. When a user is transferred from a post, if many permissions of the transferred user need to be assigned to other users, in processing, it is necessary to distinguish the permissions of the transferred user and create roles to relate to other users respectively. The operations are complicated, time-consuming, and prone to errors.

The method in the present application is as follows: The transferred user is related to several roles. When the user is transferred, the relation between the user and the roles in the original department is first canceled (the canceled roles may be re-related to other users), and then the user is related to a role in a new department. The operation is simple and not error-prone.

### BRIEF DESCRIPTION OF THE DRAWINGS

### DESCRIPTION OF THE DRAWINGS

FIG. 1 is a schematic diagram in which there is only one grantee selected and a form is selected in the present invention;
FIG. 2 is a schematic diagram in which there is a plurality of grantees selected and a form is selected in the present invention; and
FIG. 3 is a schematic diagram in which the grantee is authorized by using an authorization template in the present invention.

### DETAILED DESCRIPTION

### Description of Embodiments

The technical solutions of the present invention will be further described in detail below with reference to the figures, but the protection scope of the present invention is not limited to the following descriptions.

[Embodiment 1]: A method for respectively authorizing operation permissions of a form according to a form-field value includes a step of authorizing a permission of viewing form data and a step of selecting a grantee, wherein there is no sequence relation between the step of authorizing a permission of viewing form data and the step of selecting a grantee. The step of authorizing a permission of viewing form data includes the following steps: S1: selecting a form to be authorized; S2: selecting a field in which a viewing permission is to be authorized in the form, wherein the selected field should be a field the values of which are determined selectively or automatically; and S3: authorizing the viewing permission according to form data respectively corresponding to all field values of the selected field; said grantee is one or more roles, said role is an independent individual not a group or class, one role can only be related to a unique user during the same period, and one user is related to one or more roles.

In the following, the advantages of the method for authorizing permissions to a user through a role having the nature of an independent individual are analyzed: The user determines (obtains) permissions through its relation to the role. If the permissions of the user need to be modified, the permissions owned by the role are adjusted to achieve the object of changing the permissions of the user related to the role. Once the user is related to the role, the user owns all the operation permissions of the role.

A role is in a one-to-one relation to a user (when the role is related to one user, other users can no longer be related to that role; and if the role is not related to the user, the role can be selected to be related to other users; that is, in the same period, one role can only be related to one user). A user is in a one-to-many relation to roles (one user can be related to multiple roles at the same time).

Definition of a role: A role doesn't have the nature of a group/a class/a category/a post/a position/a type of work or the like, but has non-collective nature. The role is unique and is an independent individual. Applied in an enterprise or an institution, the role is equivalent to a post number (the post number herein is not a post, and one post may have multiple employees at the same time, but one post number can only correspond to one employee during the same period).

For example, in a company system, the following roles may be created: a general manager, a deputy general manager 1, a deputy general manager 2, a manager of Beijing sales department I, a manager of Beijing sales department II, a manager of Beijing sales department III, a Shanghai sales engineer 1, a Shanghai sales engineer 2, a Shanghai sales engineer 3, a Shanghai sales engineer 4, a Shanghai sales engineer 5, and so on. The relation between users and roles is as follows: if Zhang San, the company's employee, serves as a deputy general manager 2 of the company and also serves as a manager of Beijing sales department I, the roles to which Zhang San needs to be related are the deputy general manager 2 and the manager of Beijing sales department I, and Zhang San owns the permissions of the two roles.

The concept of conventional roles has the nature of a group/a class/a post/a position/a type of work, and one role can correspond to multiple users. However, in the present application, the concept of "role" is equivalent to a post number/a station number, and is also similar to the role in a film and a television drama: one role in the same period (in childhood, juvenile, middle-age...) can be played by only one actor or actress at the same time, but one actor or actress may play multiple roles.

After the role is created, a user may be related to the role in the process of creating the user, or may be related to the role at any time after the user is created. After the user is related to the role, the user can be released from the relation to the role at any time, and the relation between the user and another role may be created at any time.

The role is composed of: a post name + a post number, for example, a workshop worker 1, a workshop worker 2, a workshop worker 3, and so on. The role is an independent individual, and is equivalent to the concept of a post number or a station number, but different from the role in a conventional permission management system. The concept of the role in the conventional permission management system has the nature of a group or a class such as a post, a position, a type of work or the like.

The following example shows the relationship among an employee, a user, and a role after Zhang San, an employee, entered a company as follows:
1. Recruiting: after the employee is recruited, the role of the corresponding post number or station number is directly selected for the user (employee) to be related. For example, when Zhang San has joined the company (the company has assigned a user Zhang San) and works at the sales department I to be responsible for selling refrigerator products in Beijing area (the corresponding role is "sales engineer 5" under the sales department I), then the user Zhang San directly selects and is related to the role "sales engineer 5".
2. Adding position: After Zhang San has worked for a period of time, the company further arranges Zhang San to be responsible for selling TV products in Beijing area (the corresponding role is "sales engineer 8" under the sales department I) and to serve as the supervisor of an after-sales department (the corresponding role is "after-sales supervisor 1). Therefore, two roles, that is, "sales engineer 8" under the sales department I and "after-sales supervisor 1" under the after-sales department, are additionally related to the user Zhang San. In this case, the employee Zhang San is related to three roles: "sales engineer 5" and "sales engineer 8" under the sales department I, and "after-sales supervisor 1" under the after-sales department. Therefore, the user Zhang San owns the permissions of the three roles.
3. Reducing position: After a while, the company has decided to let Zhang San serve as an after-sales manager (corresponding to a role "after-sales manager" under the after-sales department) without taking up other positions any more. Therefore, the user Zhang San is related to the role "after-sales manager" under the after-sales department, and is released from the relation to the previous three roles ("sales engineer 5" and "sales engineer 8" under the sales department I, and "after-sales supervisor 1" under the sales department) at the same time. In this case, the user Zhang San owns only the permissions of the role "after-sales manager" under the after-sales department.
4. Adjusting permissions of a role (adjusting the permissions of the role itself): if the company has decided to add permissions to the after-sales manager, the permissions only need to be added to the role of the after-sales manager. With the increase of the permissions of the role of the after-sales manager, the permissions of the user Zhang San are also increased.
5. Resignation: After one year, Zhang San resigns. It is only necessary to cancel the relation between the user Zhang San and the role "after-sales manager" under the after-sales department.

For example, during the dynamic operation of the company, recruiting and resigning of staff often occur continuously, but post numbers or station numbers seldom change (or even remain unchanged within a period of time).

Conventional authorization method: In the case of a large quantity of system function points, authorizing the conventional roles that have the nature of a group or class involves a large and cumbersome workload and is very error-prone, and errors are not easily detectable in a short time and tend to cause loss to a system user.

Authorization method of the present application: in the present application, the authorization is made to the role having the nature of a post number or station number, and the user is related to the role to determine (obtain) permissions. Therefore, the permissions of the user are controlled by only a simple user-role relation. Controlling the permissions is simple, easily operable, clear, and explicit, thereby significantly improving the efficiency and reliability of authorization.

[Embodiment 2]: A method for respectively authorizing operation permissions of a form according to a form-field value includes a step of authorizing operation permissions of form data and a step of selecting a grantee, wherein there is no sequence relation between the step of authorizing operation permissions of form data and the step of selecting a grantee. The step of authorizing operation permissions of form data includes the following steps: S1: selecting a form to be authorized; S2: selecting a field in which the operation permission is to be authorized (that is: a field the values of which are used for authorization) in the form, wherein the selected field should be a field the values of which may be determined selectively (for example, the field value of a field of the industry to which the customer form belongs may be selected from a medical industry, a chemical industry, a construction industry, an education industry, and the like and does not need to be filled manually) or automatically (for example, for fields involving a form creator, a form recorder, a form production role, a form producer and the like, these items/field values are automatically determined/saved according to relevant rules once the form data is determined/saved); and S3: authorizing the operation permissions according to the form data respectively corresponding to all field values of the selected field. The authorization process includes a step of authorizing operation permissions to the entire form data, the field values of the selected field of which are empty.

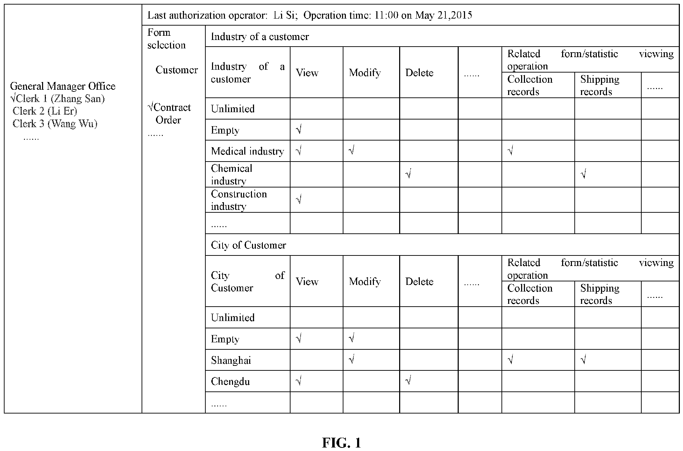

As shown in FIG. 1, when one grantee is selected and a form to be authorized is selected, the operator and operation time that a form is authorized at last time are displayed. A current state of the grantee's operation permissions for the form is also displayed, and the current state is modified and saved to get new form-operation permissions.

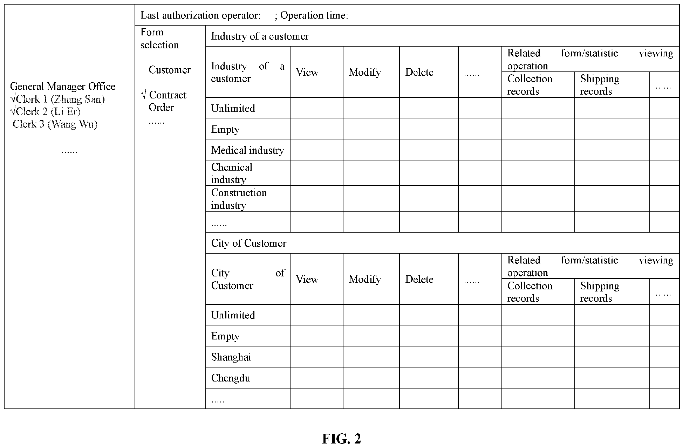

As shown in FIG. 2, when multiple grantees are selected and a form to be authorized is selected, the operator and operation time that a form is authorized at last time are displayed as empty, and the state of the selected grantee's operation permissions for the authorized form cannot be displayed either.

The operation permissions include, but are not limited to, the permissions of adding, deleting, viewing or inquiring, modifying, and printing forms/form data. The present invention can achieve authorizing to delete, modify and print forms/form data respectively based on the form-field values, and thus achieve a wider application range.

For example, the type of a selected form is "contract", a form field is selected as "industry of a customer", and its form-field values are "medical industry", "chemical industry", "construction industry", "education industry" and the like. It allows a user of a system to respectively control the viewing permissions of contract forms of customers in different industries. For example, the user of the system is allowed to view the customer contracts in the medical industry, but not to view the customer contracts in the chemical industry. Meanwhile, it is also achievable if the system requires the user to modify the customer contracts in the medical industry, but not to modify the customer contracts in the education industry.

In this embodiment, the form data, the field values of the selected field of which are empty, is effectively and uniformly authorized, thereby achieving the convenience in authorization operation and reduced authorization workload. The so-called "form data, the field values of the selected field of which are empty" means that the content of a field in the form is empty (unfilled or unselected because this field may have remained a non-mandatory field previously). For example, when a contract form is set, if the industry of a customer is not filled (because the field of the industry of a customer may not be a mandatory field, or the field of the industry of a customer in the contract form is not set as a mandatory field, and form data can be submitted/saved without selecting this field), or the industry of a customer is not selected because it is hardly defined, such contract forms (contract data) are classified as form data where the content of the field of the industry of a customer is empty. By selecting the "empty" item, such contract form data can be uniformly authorized to newly create (newly add), view/inquire, modify, delete, print and the like, which is convenient to operate.

In the embodiment, said grantee is one or more roles, said role is an independent individual not a group or class, one role can only be related to a unique user during the same period, and one user is related to one or more roles. Its advantages are the same as described in Embodiment 1.

[Embodiment 3]: A method for respectively authorizing operation permissions of a form according to a form-field value further includes: (1) selecting an grantee and an authorized form, where one or more roles are selected as the grantee, said role is an independent individual not a group or class, one role can only be related to a unique user during the same period, and one user is related to one or more roles; (2) authorizing the form to the grantee: selecting an existing role or a created template as an authorization template, and giving the form-operation permission of the authorization template to the grantee; and (3) getting the form-operation permission of the grantee after the form-operation permission is saved with or without modification.

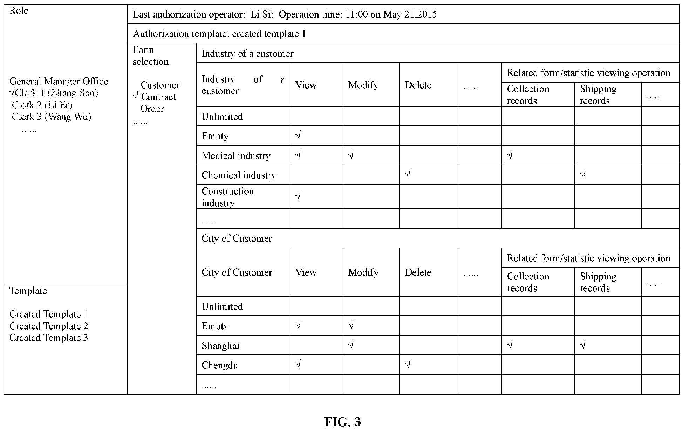

As shown in FIG. 3, in the template authorization method, a grantee, clerk 1 (Zhang San), is selected first, a form "contract form" to be authorized is selected, a created template 1 is selected as an authorization template, the operation permissions of the form in the created template 1 are used as the permissions of the clerk 1 (Zhang San), and the operation permissions of the form of the clerk 1 (Zhang San) are gotten after the operation permissions of the form in the created template 1 are saved with or without modification.

[Embodiment 4]: A method for respectively authorizing operation permissions of a form based on a form-field value includes a step of authorizing a form and a step of selecting a grantee. The grantee may be a person, a user, a role of group/class in nature, a role in one-to-one relation to the user, or the like. There is no sequence relation between the step of authorizing a form and the step of selecting a grantee.

The step of authorizing operation permissions of form data includes the following steps: S1: selecting a form to be authorized; S2: selecting a field in which the operation permission is to be authorized in the form, wherein the selected field should be a field the values of which are determined selectively or automatically; and S3: authorizing the operation permissions according to the form data respectively corresponding to all field values of the selected field. The authorization process includes a step of authorizing operation permissions to the entire form data corresponding to all field values of the selected field.

In this embodiment, the operation permission is authorized to the entire form (form data) of all field values of the selected field simply and efficiently, which is particularly suitable for the case that the form permissions of respective field values are same. For example, regardless of what is the field value of the field of the industry of a customer in the contract form (contract data), the operation permissions of the form (form data) are same and unlimited. An "unlimited" item may be selected directly under this operation permission, which means that the form data corresponding to all field values is under this operation permission. There are two other advantages to set the "unlimited" function: 1. "Unlimited" may be selected when a company executive with all permissions is authorized. 2. Once "unlimited" is selected, field values will be increased later (the field value options are increased), and the permissions of the grantee still will not be affected because "unlimited" is selected.

[Embodiment 5]: In the method for respectively authorizing the operation permissions of a form based on a form-field value, one or more grantees may be selected in the case of selecting a grantee, but there is a form allowed to be selected and only one thereof in the case of selecting the form to be authorized (because different forms have different fields).

When there is a grantee allowed to be selected and only one thereof, and a form to be authorized is selected, the operator and operation time that the form is authorized to the grantee at last time are displayed. Displaying the last operator helps to track accountability when an error occurs in authorizing the permissions of the form, and displaying the last operation time helps to intuitively judge whether or not the form needs to be re-authorized.

For example, Li Si completed the last operation of authorizing a contract form to a grantee Zhang San at 11:00 on May 21, 2015. When Zhang San is selected as the grantee and the contract is selected as a form to be authorized, it is displayed for the current authorization operator that the last contract form authorization was performed by Li Si at 11:00 on May 21, 2015 for Zhang San.

If Zhang San should not have the permission to view the content of confidential information, but is made to obtain the permission to view the content of the confidential information in the last authorization to Zhang San, those responsible can be found by searching for the last authorization operator in a subsequent accountability-tracking process.

For another example, an operator needs to authorize a contract form to 100 grantees; however, the operator only finished authorizing 70 grantees on that day. When the operator continued to authorize on the next day, the operator may view the time when each grantee is authorized at last time to determine whether or not the grantee needs to be authorized. Alternatively, according to a time range of authorization, all grantees that are authorized in a specified time range can be found. By viewing the last time that a grantee was authorized, it can be known how long the grantee's permissions have remained unchanged, which helps to intuitively judge whether to re-authorize the grantee.

[Embodiment 6]: The method for respectively authorizing the form-operation permissions according to a form-field value also includes a step of respectively authorizing the viewing permission of the related form and the related statistic of the form.

In this embodiment, the viewing permission of the related form and the related statistic of the form can be authorized respectively, that is, the related form or related statistic of the customer form may be authorized while the customer form is authorized. For example, when a customer form is authorized to Zhang San, if a contract form, an order form, a shipping statistic and the like, which are related to the customer form are displayed, Zhang San is then authorized to view the "related contract". Then, in the case of viewing the related information of a customer, Zhang San can view the contract information related to the customer, but cannot view the customer's order and the shipping statistic information. This embodiment solves the problem of authorization matching vulnerability between forms that may occur in the prior art in viewing the related information between forms controlled by independent form permissions, and also solves the problem in the prior art that the related information cannot be selectively viewed (all pieces of the related information are viewed by default conventionally).

In this embodiment, when a form is authorized, a related form/statistic of the form (such as a customer form) is displayed for selection in authorization. In addition, these related statistics only involve the statistics on the contract information related to the customer, thereby avoiding unnecessary information leakage and possible losses of the company.

[Embodiment 7]: A method for respectively authorizing operation permissions of a form according to a form-field value includes a step of authorizing operation permissions of form data and a step of selecting a grantee, wherein there is no sequence relation between the step of authorizing operation permissions of form data and the step of selecting a grantee. The step of authorizing operation permissions of form data includes the following steps: S1: selecting a form to be authorized; S2: selecting a field in which the operation permission is to be authorized in the form, wherein the selected field should be a field the values of which are determined selectively or automatically; and S3: authorizing the operation permissions according to form data respectively corresponding to all field values of the selected field, wherein said operation permission includes one or a combination of more of a viewing permission, a modifying permission, a deleting permission, and a printing permission.

A particularly applicable example in this embodiment is a customer level authorization that a form field is a user level field (the "customer level" field in the customer form). For example: for a non-important customer whose field value of the customer level field is "fifth-level customer", a user can be authorized to modify and delete a form (fifth-level customer/form data) and also print the form (fifth-level customer/form data); for an important customer whose field value is "first-level customer", the modifying, deleting and printing functions are not authorized, thereby preventing important customer's form (first-level customer/form data) from being maliciously modified or deleted, and also preventing important customer's data from being leaked by printing.

The above is only a preferred embodiment of the present invention, and it should be understood that the present invention is not limited to the forms disclosed herein, and is not to be construed as excluding the other embodiments, but may be used in various other combinations, modifications and environments. Modification can be made by the techniques or knowledge of the above teachings or related art within the scope of the teachings herein. All changes and modifications made by those skilled in the art without departing from the spirit and scope of the present invention are intended to be within the protection scope of the appended claims.

## Claims

1. A method for respectively authorizing operation permissions of a form according to a form-field value includes a step of authorizing a permission of viewing form data and a step of selecting a grantee, wherein there is no sequence relation between the step of authorizing a permission of viewing form data and the step of selecting a grantee;
the step of authorizing a permission of viewing form data includes the following steps:
S1: selecting a form to be authorized;
S2: selecting a field in which a viewing permission is to be authorized in the form, wherein the selected field should be a field the values of which are determined selectively or automatically; and
S3: authorizing the viewing permission according to form data respectively corresponding to all field values of the selected field;
said grantee is one or more roles, said role is an independent individual not a group or class, one role can only be related to a unique user during the same period, and one user is related to one or more roles.

2. The method for respectively authorizing operation permissions of a form according to a form-field value includes a step of authorizing operation permissions of form data and a step of selecting a grantee, wherein there is no sequence relation between the step of authorizing operation permissions of form data and the step of selecting a grantee;
the step of authorizing operation permissions of form data includes the following steps:
S1: selecting a form to be authorized;
S2: selecting a field in which the operation permission is to be authorized in the form, wherein the selected field should be a field the values of which are determined selectively or automatically; and
S3: authorizing the operation permissions according to form data respectively corresponding to all field values of the selected field, wherein the authorization process includes a step of authorizing operation permissions to the entire form data, the field values of the selected field of which are empty.

3. The method for respectively authorizing operation permissions of a form according to a form-field value according to claim 2, wherein one or more grantees can be selected in the case of selecting a grantee, and there is a form allowed to be selected and only one thereof in the case of selecting the form to be authorized.

4. The method for respectively authorizing operation permissions of a form according to a form-field value according to claim 3, wherein there is a grantee allowed to be selected and only one thereof, and when a form to be authorized is selected, an operator and operation time that the form is authorized to the grantee at last time are displayed.

5. The method for respectively authorizing operation permissions of a form according to a form-field value according to any one of claims 2 to 4, wherein said grantee is one or more roles, said role is an independent individual not a group or class, one role can only be related to a unique user during the same period, and one user is related to one or more roles.

6. The method for respectively authorizing operation permissions of a form according to a form-field value according to claim 2, wherein said operation permission includes one or a combination of more of a viewing permission, a modifying permission, a deleting permission, and a printing permission.

7. The method for respectively authorizing operation permissions of a form according to a form-field value according to claim 2, further comprising a step of respectively authorizing the viewing permission of the related form and the related statistic of the form.

8. A method for respectively authorizing operation permissions of a form according to a form-field value, comprising the following steps:
(1) selecting a grantee and an authorized form, wherein one or more roles are selected as the grantee, said role is an independent individual not a group or class, one role can only be related to a unique user during the same period, and one user is related to one or more roles;
(2) authorizing the form to the grantee: selecting an existing role or a created template as an authorization template, and giving the form-operation permission of the authorization template to the grantee; and
(3) getting the form-operation permission of the grantee after the form-operation permission is saved with or without modification.

9. A method for respectively authorizing operation permissions of a form according to a form-field value includes a step of authorizing operation permissions of form data and a step of selecting a grantee, wherein there is no sequence relation between the step of authorizing operation permissions of form data and the step of selecting a grantee;
the step of authorizing operation permissions of form data includes the following steps:
S1: selecting a form to be authorized;
S2: selecting a field in which the operation permission is to be authorized in the form, wherein the selected field should be a field the values of which are determined selectively or automatically; and
S3: authorizing the operation permissions according to the form data respectively corresponding to all field values of the selected field, wherein the authorization process includes a step of authorizing the operation permissions to the entire form data of all field values of the selected field.

10. A method for respectively authorizing operation permissions of a form according to a form-field value includes a step of authorizing operation permissions of form data and a step of selecting a grantee, wherein there is no sequence relation between the step of authorizing operation permissions of form data and the step of selecting a grantee;
the step of authorizing operation permissions of form data includes the following steps:
S1: selecting a form to be authorized;
S2: selecting a field in which the operation permission is to be authorized in the form, wherein the selected field should be a field the values of which are determined selectively or automatically; and
S3: authorizing the operation permissions according to form data respectively corresponding to all field values of the selected field, wherein said operation permission includes one or a combination of more of a viewing permission, a modifying permission, a deleting permission, and a printing permission.
